# NEUE EUROPÄISCHE PATENTSCHRIFT

(11) **EP 2 340 929 B2**
(45) Veröffentlichungstag und Bekanntmachung des Hinweises auf die Entscheidung über den Einspruch: **30.11.2016**
(45) Hinweis auf die Patenterteilung: 26.02.2014
(21) Anmeldenummer: 10015358.4
(22) Anmeldetag: 07.12.2010
(51) Int. Cl.: B32B 1/08, F16L 59/02, F16L 59/14

(54) **VERFAHREN ZUR HERSTELLUNG EINES KUNSTSTOFFMANTELROHRES**
PROCESS FOR PRODUCING A PLASTIC SHEATH PIPE
PROCÉDÉ DE FABRICATION D'UN TUBE D'ENVELOPPEMENT EN PLASTIQUE

(30) Priorität: 23.12.2009 DE 102009060131; 01.06.2010 DE 102010022354
(43) Veröffentlichungstag der Anmeldung: 06.07.2011
(73) Patentinhaber: isoplus Fernwärmetechnik GmbH, 99706 Sondershausen (DE)
(72) Erfinder: Hackel, Klaus, 99706 Sondershausen (DE)
(74) Vertreter: Hauck Patentanwaltspartnerschaft mbB

(56) Entgegenhaltungen:
- EP-A1- 1 355 103
- EP-A1- 1 777 244
- WO-A1-2004/003423
- DE-U1- 20 315 754
- DE-U1-202006 009 337

## Beschreibung

Die vorliegende Erfindung betrifft ein Verfahren zur Herstellung eines Kunststoffmantelrohres.

Derartige Kunststoffmantelrohre sind bekannt. Ein Beispiel hiervon ist in der nicht vorveröffentlichten deutschen Patentanmeldung 10 2008 048 104 beschrieben.

Solche Kunststoffmantelrohre finden überwiegend im Fernwärmeleitungsbau Verwendung. Die Durchmesser der Mantelrohre liegen in der Regel zwischen 90 und 1.200 mm, wobei auch größere Durchmesser möglich sind. Die Rohre bestehen aus einem Mediumrohr, meist aus Stahl, wobei jedoch auch andere Werkstoffe möglich sind. Das Mediumrohr wird von einer zur Wärmedämmung dienenden Isolierung umgeben, bei der es sich in der Regel um einen Hartschaum handelt. Den äußeren Abschluss bildet ein Kunststoffaußenrohr, das einen mechanischen Schutzmantel darstellt und häufig aus Polyethylen besteht.

Der Haftverbund eines derartigen Sandwichsystems ist für die Rohrstatik bei erdverlegten, warmgehenden Leitungen von großer Bedeutung, da alle thermischen Kräfte kraftschlüssig übertragen werden. Insbesondere ist es hierbei von Bedeutung, dass die zur Wärmedämmung vorgesehene Isolierung über einen langen Zeitraum vollständig ihre Funktion erfüllt. Aufgrund von umfangreichen Untersuchungen wurde jedoch festgestellt, dass solche Isolierungen, insbesondere Hartschaumisolierungen, speziell aus Polyurethanschaum, altern, und zwar insbesondere bei hohen Temperaturen oberhalb von ca. 120 °C. Dadurch verschlechtert sich nicht nur der Wärmedämmwert, sondern auch der mechanische Haftverbund wird in Mitleidenschaft gezogen. Ein derartiges Alterungsverhalten wird auf die durch das Kunststoffaußenrohr eindringenden Gase, insbesondere Sauerstoff, zurückgeführt. Durch den eindringenden Sauerstoff entstehen innerhalb der Isolierung Oxidationsprozesse, die zu einer Eigenschaftsverschlechterung der Isolierung führen. Gleichzeitig diffundiert CO₂ nach außen.

Die vorstehend erwähnten Probleme treten insbesondere bei den als Isolierung verwendeten PUR-Hartschäumen auf. Von der Anmelderin durchgeführte Untersuchungen zur PUR-Schaumalterung haben gezeigt, dass der Schaum durch das Eindringen von Sauerstoff altert, und zwar umso schneller, je höher die Heißwassertemperaturen sind. Der oxidative Abbau führt zu einer Zerstörung der "Zellfenster" im PUR-Schaum. Daraus resultiert ein Abbau der Druckfestigkeit und der Scherbelastungsmöglichkeit des Schaumes bis hin zum mechanischen Versagen des Systems.

Aus der WO 2004/003423 A1 ist ein isoliertes Rohr mit einem oder mehreren Innenrohren und einem Isolationsschaum, der das Innenrohr umgibt, bekannt. Das Rohr weist eine diffusionsregulierende Schicht auf, die auf die Außenseite des Schaums aufgebracht ist. Des Weiteren kann das Rohr ein Außenrohr aus einem haltbaren Material, vorzugsweise Polyethylen, besitzen. Die diffusionsregulierende Schicht kann zwischen dem Polyethylen-Außenrohr und dem Polyurethanschaum oder auf der Außenseite des Polyethylen-Außenrohres angeordnet sein.

Aus der DE 20 2006 009 337 U1 ist ein wärmegedämmtes Leitungsrohr bekannt, das ein Innenrohr, eine das Innenrohr umgebende Wärmedämmschicht auf der Basis von Polyurethanschaum, eine die Wärmedämmschicht umgebende Folie sowie ein gewelltes Außenrohr aus thermoplastischem Kunststoff aufweist. Die Folie ist hierbei permeationsdicht für Wasser, Wasserdampf und Treibmittel.

Ein Kunststoffmantelrohr ist aus der EP 1 355 103 A1 bekannt. Bei diesem bekannten Rohr ist die Gaspermeationssperrschicht als Schicht aus polymerem Material ausgebildet, die zumindest teilweise die Isolierung umgibt. Mit anderen Worten, die Gaspermeationssperrschicht befindet sich hierbei auf der Außenseite der Isolierung bzw. der Innenseite des Außenrohres.

Wenn die diffusionsregulierende Schicht auf der Außenseite des Außenrohres angeordnet ist, besteht die Gefahr, dass die Schicht durch mechanische Einwirkungen beschädigt bzw. zerstört wird. Die Anordnung der diffusionsregulierenden Schicht zwischen dem Außenrohr und dem Polyurethanschaum bringt ebenfalls Nachteile mit sich, weil während der Herstellung des Rohres beim manuellen oder maschinellen Einfädeln des Innenrohres in das Außenrohr das Innenrohr (Stahlrohr) mit der diffusionsregulierenden Schicht in Kontakt treten und diese beschädigen bzw. zerstören kann.

Der vorliegenden Erfindung liegt die Aufgabe zugrunde, ein Verfahren zur Herstellung eines Kunststoffmantelrohres zu schaffen, mit dem sich Kunststoffmantelrohre mit einer besonders langen nutzbaren Lebensdauer herstellen lassen.

Diese Aufgabe wird erfindungsgemäß durch ein Verfahren mit den Merkmalen von Patentanspruch 1 gelöst.

Mit der erfindungsgemäßen Lösung gelingt es, den Gasaustausch in der Isolierung, insbesondere im Schaumsystem, zu unterbinden bzw. soweit zu reduzieren, dass dessen Eigenschaften über die Lebensdauer des Kunststoffmantelrohres weitgehend erhalten bleiben. Mit anderen Worten, es gelingt, die Auswirkungen auf das System, welche eine gealterte Isolierung mit sich bringt, zu reduzieren. Insbesondere kann eine Verringerung des Wärmedämmwertes vermieden werden.

Das Eindringen des zur Alterung führenden Sauerstoffs durch das Kunststoffaußenrohr in die Isolierung bzw. Schaumsystem wird somit verhindert und hierdurch eine weitestgehende Vermeidung der Schaumalterung durch die Gasdiffusion bei beinahe gleichbleibender Dämmwirkung erreicht. Die mechanischen Kennwerte des Schaumes werden aufrechterhalten. Der vorhandene Haftverbund wird sichergestellt. Es wird ein geschlossenes permeationsdichtes System geschaffen, so dass dauerhaft höhere Temperaturen möglich sind, ohne die Lebensdauer der Kunststoffmantelrohre zu verkürzen. Der Wärmedämmwert des Systems wird ebenfalls über den Lebensdauerzyklus durch den unterbundenen Zellgasaustausch erhalten.

Die erfindungsgemäß hergestellte, aus Kunststoff bestehende Gaspermeationssperrschicht bietet ferner eine Reihe von weiteren Vorteilen. Zum einen kann die Gaspermeationssperrschicht zusammen mit einer oder mehreren Schichten des Kunststoffaußenrohres coextrudiert werden. Das als Mehrschichtrohr ausgebildete Kunststoffaußenrohr lässt sich somit relativ einfach herstellen. Zum anderen treten durch die im Kunststoffaußenrohr vorgesehene Gaspermeationssperrschicht aus Kunststoff auch keine Probleme in Bezug auf die Verbindung von mehreren Rohrstücken auf. So lassen sich entsprechende Rohrlängen sowohl stumpf als auch mit Hilfe von Muffen miteinander verschweißen, ohne dass die Gasper-meationssperrschicht Probleme bereitet, wie dies beispielsweise bei Metallfolien als Gaspermeationssperrschichten der Fall ist.

Da die Gaspermeationssperrschicht in das Außenrohr integriert ist, treten die beim vorstehend genannten Stand der Technik geschilderten Probleme nicht auf. Die vorgesehene Gaspermeationssperrschicht ist sowohl auf der Innenseite als auch auf der Außenseite von einer Materialschicht des Kunststoffaußenrohres umgeben, so dass die Gaspermeationssperrschicht gegenüber Beschädigungen von außen und auch von innen geschützt ist. Insbesondere wird bei der Herstellung des Kunststoffmantelrohres während der Einführung des Mediumrohres bzw. Innenrohres in das Außenrohr kein Kontakt zwischen Mediumrohr und Gaspermeationssperrschicht erzielt, so dass die Sperrschicht hierdurch nicht beschädigt werden kann.

Bei dem erfindungsgemäßen Verfahren werden in einem ersten Schritt die Innenschicht, eine innere Haftvermittlerschicht und die Gasdiffusionssperrschicht coextrudiert und nach Abkühlung in einem zweiten Schritt eine äußere Haftvermittlerschicht und die Außenschicht des Kunststoffaußenrohres aufextrudiert. Dies wird mit einem 3-Schicht-Extruder und anschließend mit einem 2-Schicht-Extruder durchgeführt.

Geeignete Haftvermittler sind dem Fachmann bekannt und müssen an dieser Stelle nicht mehr im Einzelnen erläutert werden.

Als Material für die Gaspermeationssperrschicht werden Ethylen-Vinylalkohol-Copolymere (EVOH) verwendet. Diese Materialien sind porenfrei und chemikalien- und witterungsbeständig. Sie lassen sich ferner gut in das Kunststoffaußenrohr integrieren. Diese Materialien erfüllen daher die in Bezug auf das Gaspermeationssperrverhalten und eine gute Herstellbarkeit gestellten Anforderungen. Eine solche aus EVOH bestehende Gaspermeationssperrschicht kann zusammen mit einer oder mehreren Schichten des Kunststoffaußenrohres coextrudiert werden, wobei sich die EVOH-Schicht gut in die Kunststoffschicht des Kunststoffaußenrohres integrieren lässt.

Als Material für das Kunststoffaußenrohr wird vorzugsweise Polyethylen, insbesondere unvernetztes HD-PE, auch vernetztes Polyethylen, verwendet. Ein solches PE-Kunststoffaußenrohr bietet einen guten mechanischen Schutz und ermöglicht einen entsprechenden Haftverbund.

Bei dem Kunststoffmantelrohr wird die Isolierung vorzugsweise aus einem Hartschaum, insbesondere Polyurethan-Hartschaum, hergestellt. Diese Materialien sorgen für die gewünschte Wärmedämmung, haben jedoch die eingangs bereits erwähnten Alterungsprobleme infolge Gasaustausches, in Bezug auf die die Erfindung Abhilfe schafft. Es handelt sich hierbei um eine geschlossenzellige Schaumstruktur, die auch für ausreichend gute mechanische Eigenschaften sorgt.

Die Gaspermeationssperrschicht wird im Kunststoffaußenrohr vorzugsweise mittig angeordnet. Eine solche Lage wird bevorzugt, um sowohl zur Innenseite als auch zur Außenseite hin eine ausreichende Materialüberdeckung der Gaspermeationssperrschicht zu erzielen. Eine entsprechende Materialüberdeckung zur Innenseite hin ist von Bedeutung, da beim Einfädeln des Mediumrohres in das Kunststoffaußenrohr bei der Herstellung des Kunststoffmantelrohres die Gefahr besteht, dass das Mediumrohr das Kunststoffaußenrohr kontaktiert und auf diese Weise die eingebaute Gaspermeationssperrschicht beschädigen kann. Eine entsprechende Materialüberdeckung zur Außenseite hin ist in jedem Falle erforderlich, um zu verhindern, dass entsprechende, von außen einwirkende Kräfte die Gaspermeationssperrschicht beschädigen können.

Bei einer anderen Ausführungsform wird die Gaspermeationssperrschicht im Kunststoffaußenrohr im Innenbereich desselben angeordnet. Bei dieser Ausführungsform steht eine besonders große Materialüberdeckung zur Außenseite hin im Vordergrund. Ferner hat diese Ausführungsform den Vorteil, dass bei einem Aufschweißen von Verbindungsmuffen etc. die Permeationssperrschicht auf besonders sichere Weise nicht beeinträchtigt wird.

Durch Untersuchungen wurde festgestellt, dass die Dicke der Gaspermeationssperrschicht 80 - 120 µm, insbesondere 100 µm, betragen sollte. Mit einem derartigen Bereich wird bei üblich dimensionierten Rohren eine völlig ausreichende Gassperre erreicht. Der Einbau einer Gaspermeationssperrschicht mit einer Dicke von maximal 120 µm ist vollständig ausreichend, um bei Kunststoffmantelrohren mit üblichen Dimensionen eine sichere Gasbarriere zu gewährleisten.

Bei den hier in Rede stehenden Kunststoffmantelrohren handelt es sich um Großrohre, die insbesondere einen Außendurchmesser ≥90 mm aufweisen.

Die Erfindung wird nachfolgend anhand eines Ausführungsbeispiels in Verbindung mit der Zeichnung im Einzelnen erläutert. Es zeigen:
- Figur 1: einen Querschnitt durch ein Kunststoffmantelrohr, wobei die einzelnen Schichten des Rohres nicht maßstäblich dargestellt sind; und
- Figur 2: einen Teilquerschnitt (nicht maßstäblich) durch das Kunststoffaußenrohr des Kunststoffmantelrohres der Figur 1.

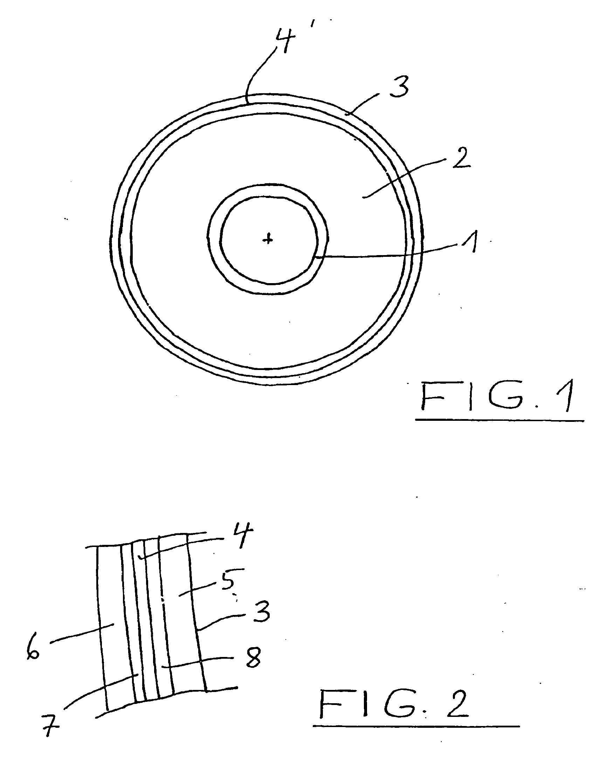

Das in Figur 1 im Querschnitt schematisch dargestellte Kunststoffmantelrohr ist ein Fernwärmerohr und besitzt ein inneres Mediumrohr 1 aus Stahl, in dem als Medium Heißwasser geführt wird. Das Stahlrohr 1 ist von einer zu Wärmedämmzwecken dienenden Isolierung 2 umgeben, bei der es sich um einen PUR-Hartschaum handelt. Den äußeren Abschluss des Kunststoffmantelrohres bildet ein Kunststoffaußenrohr 3 aus Polyethylen, das in seinem Inneren eine Gaspermeationssperrschicht 4 aufweist, die aus Ethylen-Vinylalkohol-Copolymer (EVOH) besteht. Benachbart zur Gaspermeationssperrschicht 4 sind eine innere und äußere Haftvermittlerschicht vorgesehen, die in Figur 1 nicht dargestellt sind.

Figur 2 zeigt einen vergrößerten schematischen Teilquerschnitt durch das Kunststoffaußenrohr 3. Das Rohr 3 setzt sich aus einer inneren Polyethylenschicht 5, einer hierzu benachbarten inneren Haftvermittlerschicht 8, der Gaspermeationssperrschicht 4 aus EVOH, einer benachbart hierzu angeordneten äußeren Haftvermittlerschicht 7 und einer äußeren Polyethylenschicht 6 zusammen. Die Gasdiffusionssperrschicht 4 besitzt eine Dicke von 100 µm, während das gesamte Kunststoffaußenrohr 3 eine Dicke von 3 mm hat.

## Patentansprüche

1. Verfahren zur Herstellung eines Kunststoffmantelrohres mit einem Mediumrohr (1), insbesondere aus Stahl, einem als mechanischer Schutzmantel dienenden Kunststoffaußenrohr (3) und einem den Ringspalt zwischen Mediumrohr (1) und Außenrohr (3) ausfüllenden, zur Wärmedämmung dienenden Isolierung (2), wobei das Außenrohr (3) als Mehrschichtrohr ausgebildet ist und in seinem Inneren eine in das Außenrohr (3) integrierte, aus Ethylen-Vinylalkohol-Copolymer (EVOH) bestehende Gaspermeationssperrschicht (4) aufweist, mit den folgenden Schritten:
Extrudieren des Kunststoffaußenrohres (3) mit integrierter Gaspermeationssperrschicht (4) derart, dass diese sowohl auf der Innenseite als auch auf der Außenseite von einer Materialschicht des Kunststoffaußenrohres (3) umgeben ist, und Abkühlenlassen desselben;
Einführen des Mediumrohres in das Kunststoffaußenrohr (3) und Zentrieren desselben in diesem; und
Ausschäumen des Ringraumes zwischen Kunststoffaußenrohr (3) und Mediumrohr (1),
wobei in einem ersten Schritt die Innenschicht, eine innere Haftvermittlerschicht (7) und die Gaspermeationssperrschicht (4) coextrudiert werden und nach Abkühlung in einem zweiten Schritt eine äußere Haftvermittlerschicht (8) und die Außenschicht des Kunststoffaußenrohres (3) aufextrudiert werden.

2. Verfahren nach einem der vorangehenden Ansprüche,
**dadurch gekennzeichnet, dass** das Kunststoffaußenrohr (3) aus Polyethylen, insbesondere unvernetztem HD-PE, besteht.

3. Verfahren nach einem der vorangehenden Ansprüche,
**dadurch gekennzeichnet, dass** die Isolierung (2) aus einem Hartschaum, insbesondere Polyurethan-Hartschaum, besteht.

4. Verfahren nach einem der vorangehenden Ansprüche,
**dadurch gekennzeichnet, dass** die Gaspermeationssperrschicht (4) im Kunststoffaußenrohr (3) mittig angeordnet ist.

5. Verfahren nach einem der Ansprüche 1-3, **dadurch gekennzeichnet, dass** die Gaspermeationssperrschicht im Kunststoffaußenrohr im Innenbereich angeordnet ist.

6. Verfahren nach einem der vorangehenden Ansprüche,
**dadurch gekennzeichnet, dass** die Gaspermeationssperrschicht (4) eine Dicke von 80 - 120 µm, insbesondere von 100 µm, besitzt.

7. Verfahren nach einem der vorangehenden Ansprüche,
**dadurch gekennzeichnet, dass** das Kunststoffmantelrohr einen Außendurchmesser ≥90 mm besitzt.

8. Verfahren nach einem der vorangehenden Ansprüche,
**dadurch gekennzeichnet, dass** das Kunststoffmantelrohr zusätzlich eine Gaspermeationssperrschicht auf mindestens einer Stirnfläche des Rohres aufweist.

## Claims

1. A process for producing a plastic sheath pipe having a medium pipe (1), especially existing of steel, a plastic outer pipe (3) serving as mechanic protective jacket, and an insulation (2) filling the annular gap between the medium pipe (1) and the outer pipe (3) and serving as protection against loss of heat, wherein the outer pipe (3) is formed as multi-layer pipe and has in its interior a gas permeation barrier layer (4) integrated into the outer pipe (3) and consisting of ethylene-vinyl alcohol-copolymer (EVOH), said process comprising the following steps:
Extruding the plastic outer pipe (3) with the integrated gas permeation barrier layer (4) in such a manner that the same is surrounded by a material layer of the plastic outer pipe (3) not only on its inner side but also on its outer side, and allowing the same to cool;
introducing the medium pipe into the plastic outer pipe (3) and centering the same in the plastic outer pipe; and
foaming the annular space between the plastic outer pipe (3) and the medium pipe (1),
wherein in a first step the inner layer, an inner bonding agent layer (7) and the gas permeation barrier layer (4) are coextruded and, after cooling, in a second step an outer bonding agent layer (8) and the outer layer of the plastic outer pipe (3) are extruded on the same.

2. The process according to claim 1, **characterized in that** the plastic outer pipe (3) consists of polyethylene, especially of not-cross-linked HD-PE.

3. The process according to one of the preceding claims, **characterized in that** the insulation (2) consists of a hard foam, especially polyurethane hard foam.

4. The process according to one of the preceding claims, **characterized in that** the gas permeation barrier layer (4) is centrally disposed in the plastic outer pipe (3).

5. The process according to one of the claims 1-3, **characterized in that** the gas permeation barrier layer is disposed in the inner region of the plastic outer pipe (3).

6. The process according to one of the preceding claims, **characterized in that** the gas permeation barrier layer (4) has a thickness of 80-120 µm, especially of 100 µm.

7. The process according to one of the preceding claims, **characterized in that** the plastic sheath pipe has an outer diameter ≥ 90 mm.

8. The process according to one of the preceding claims, **characterized in that** the plastic sheath pipe has additionally a gas permeation barrier layer on at least one front face of the pipe.

## Revendications

1. Procédé de fabrication d'un tuyau à gaine en matière plastique comprenant un tuyau à fluide (1), en particulier en acier, un tuyau extérieur en matière plastique (3) servant de gaine de protection mécanique et une isolation (2) remplissant la fente annulaire entre le tuyau à fluide (1) et le tuyau extérieur (3) servant d'isolation thermique, le tuyau extérieur (3) étant conçu comme un tuyau multicouche et présentant à l'intérieur une couche barrière à la perméation de gaz (4) intégrée dans le tuyau extérieur (3), constituée de copolymère éthylène-alcool vinylique (EVOH), comprenant les étapes suivantes :
extruder le tuyau en matière plastique (3) avec la couche barrière à la perméation de gaz (4) intégrée de telle manière que celle-ci soit entourée aussi bien sur le côté intérieur que sur le côté extérieur d'une couche de matériau du tuyau extérieur en matière plastique (3), et laisser refroidir ce même tuyau ;
introduire le tuyau à fluide dans le tuyau extérieur en matière plastique (3) et le centrer dans celui-ci ; et
remplir de mousse l'espace annulaire entre le tuyau extérieur en matière plastique (3) et le tuyau à fluide (1),
lors de la première étape, la couche intérieure, une couche d'adhésif intérieure (7) et la couche barrière à la perméation de gaz (4) sont coextrudées et, après refroidissement, lors d'une deuxième étape, une couche d'adhésif extérieure (8) et la couche extérieure du tuyau extérieur en matière plastique (3) sont extrudées sur celles-ci.

2. Procédé selon la revendication 1 **caractérisé en ce que** le tuyau extérieur en matière plastique (3) est constitué de polyéthylène, en particulier de HD-PE non réticulé.

3. Procédé selon l'une quelconque des revendications précédentes, **caractérisé en ce que** l'isolation (2) est constituée d'une mousse dure, en particulier d'une mousse dure de polyuréthane.

4. Procédé selon l'une quelconque des revendications précédentes, **caractérisé en ce que** la couche barrière à la perméation de gaz (4) est disposée au milieu dans le tuyau extérieur en matière plastique (3).

5. Procédé selon l'une quelconque des revendications 1 - 3, **caractérisé en ce que** la couche barrière à la perméation de gaz est disposée dans la région intérieure dans le tuyau extérieur en matière plastique.

6. Procédé selon l'une quelconque des revendications précédentes, **caractérisé en ce que** la couche barrière à la perméation de gaz (4) a une épaisseur de 80 - 120 µm, en particulier de 100 µm.

7. Procédé selon l'une quelconque des revendications précédentes, **caractérisé en ce que** le tuyau extérieur en matière plastique a un diamètre extérieur ≥ 90 mm.

8. Procédé selon l'une quelconque des revendications précédentes, **caractérisé en ce que** le tuyau extérieur en matière plastique présente en outre une couche barrière à la perméation de gaz sur au moins une surface frontale du tuyau.
